# EUROPÄISCHE PATENTANMELDUNG

(11) **EP 4 553 225 A2**
(43) Veröffentlichungstag der Anmeldung: **14.05.2025**
(21) Anmeldenummer: 24184154.3
(22) Anmeldetag: 25.06.2024
(51) Int. Cl.: D21J 3/10

(54) **VERFAHREN UND VORRICHTUNG ZUM FORMEN UND BESCHICHTEN EINES FASERN UMFASSENDEN BEHÄLTERS**

(30) Priorität: 10.11.2023 DE 102023131286
(71) Anmelder: Krones AG, 93073 Neutraubling (DE)
(72) Erfinder: ZACHARIAS, Joerg, 93073 Neutraubling (DE); FREESE, Yvette, 93073 Neutraubling (DE); AUMER, Robert, 93073 Neutraubling (DE); HIPPEL, Andreas, 93073 Neutraubling (DE)
(74) Vertreter: Grünecker Patent- und Rechtsanwälte PartG mbB

(57) **Zusammenfassung**

Die Erfindung betrifft ein Verfahren zum Formen und Beschichten eines Fasern, insbesondere Pulpe, umfassenden Behälters, wobei das Verfahren umfasst: Formen eines Fasern, insbesondere Pulpe, umfassenden Behälters, der eine Öffnung (3) umfasst, wobei der Behälter in einer Form zur Verfügung gestellt wird und insbesondere um eine Beschichtungsblase herumgeformt wird oder Formen von Fasern, insbesondere Pulpe, umfassenden Behälterelementen, die eine Öffnung umfassen, wobei die Behälterelemente in einer Form zur Verfügung gestellt werden und insbesondere um eine Beschichtungsblase herumgeformt werden, Formen der Beschichtungsblase, welche zumindest zeitweise und/oder teilweise in dem Behälter oder den Behälterelementen angeordnet wird, Beaufschlagen der Beschichtungsblase zu deren Expansion mit einem Druckmedium einer Druckquelle, so dass zumindest teilweises die Beschichtungsblase an einer Innenwand des Behälters oder der Behälterelemente angelegt wird und optionales zumindest teilweises Komprimieren der Wandstärke des Behälters, und Trennen der Beschichtungsblase von der Druckquelle während die Beschichtungsblase zumindest teilweise als Behälterbeschichtung in dem Behälter oder den Behälterelementen verbleibt. Des Weiteren betrifft die Erfindung eine Vorrichtung.

## Beschreibung

Die vorliegende Erfindung betrifft ein Verfahren sowie eine Vorrichtung zum Formen und Beschichten eines Fasern umfassenden Behälters.

Aus dem Stand der Technik sind Verfahren bekannt, in denen für den Trocknungsschritt eines feuchten Formkörpers aus Pulpe eine Blase verwendet wird, um den Formkörper in Form zu halten und glatt zu pressen. Dies erfolgt meist während des Trocknungsschritts, um das Schrumpfen während der Trocknung des Pulpebehälters zu minimieren.

Anschließend wird die Innenwand des Pulpebehälters beschichtet, um die Wasserundurchlässigkeit sowie die Permeation von Gasen und Wasserdampf des Behälters zu minimieren. Um die Verarbeitbarkeit des Beschichtungsmaterials zu verbessern, wird dieses typischerweise bei über 100°C an die Innenwand des Pulpebehälters gesprüht. An dem Verfahren nach dem Stand der Technik ist nachteilig, dass die Blase, nachdem sie mit Druck beaufschlagt wurde, um während oder vor dem Trocknungsprozess gegen die Innenseite des Behälters zu drücken, wieder frei von Überdruck gemacht werden muss, um diese anschließend aus dem Behälter herauszuziehen. Zudem muss für jede Version eine eigene Blase vorgehalten werden, was den Formatwechsel aufwendig gestaltet.

In einem weiteren Schritt wird nun die Beschichtung auf der Innenwand des Pulpebehälters aufgebracht, wozu zumindest das Beschichtungsmaterial erhitzt wird.

Das Herausziehen der Blase, Aufheizen der Beschichtung der Behälter und Besprühen der Innenseite mit dem Beschichtungsmaterial erhöht den Energie- und Zeitaufwand des Herstellungsprozesses der Pulpebehälter.

Hiervon ausgehend liegt der vorliegenden Erfindung die Aufgabe zugrunde ein Verfahren bzw. eine Vorrichtung zum Formen und Beschichten eines Fasern umfassenden Behälters bereitstellen, das/die eine gegenüber dem Stand der Technik sowohl zeiteffizientere als auch energieeffizientere Herstellung von Fasern umfassenden Behältern ermöglicht.

Die Aufgabe wird mit einem Verfahren nach Anspruch 1 gelöst.

Im Folgenden bezieht sich der Begriff Behälter sowohl auf einen vollständigen Behälter als auch auf mehrere einzelne Behälterelemente.

Bei den Fasern handelt es sich insbesondere zumindest teilweise um pflanzliche Fasern, beispielsweise Zellulose. Pulpe kann eine Suspension aus Wasser und Fasern umfassen Die Fasern können Lignin, Bananenblätter, Chinin, Glasfasern, Metallfäden, Zellstofffasern, Hanf, Sisal, Linters, Silphie, Weizen und/oder Operationsfäden umfassen. Die Fasern können beispielsweise Fasern von Nadelhölzern, Blattgehölzen und/oder Platanen und/oder von Gräsern, Schilf und/oder Bambus oder dergleichen umfassen. Lignin kann eine stützende Wirkung auf den Zellstoff haben und kann auch für transparente Anwendungen geeignet sein. Bananenblätter können für größere Behälter, wie beispielsweise Ein-Weg-Geschirr, geeignet sein. Durch ein Einbetten von Glasfasern, Metallfäden und/oder Operationsfäden kann eine Verbesserung der Festigkeit erreicht werden.

Mit dem Verfahren verbleibt die Beschichtungsblase nach dem Formen des Behälters, insbesondere nach dem Glattdrücken und Komprimieren der Behälterwand, als Beschichtung der Innenwand des Behälters im Behälter. Somit entfällt das Ablassen des Überdrucks, anschließende Herausziehen der Blase nach dem Formschritt und der zusätzliche Beschichtungsschritt. Die Beschichtungsblase wird somit doppelt genutzt und der Form- und Beschichtungsprozess kann zeitgleich ablaufen. Damit kann das Herstellungsverfahren der Fasern umfassenden Behälter zeiteffizienter und energieeffizienter durchgeführt werden.

In einem weiteren Ausführungsbeispiel kann das Verfahren weiter umfassen: ein Erhöhen der Temperatur zumindest eines Bereiches des Behälters und zumindest eines Bereiches der Beschichtungsblase, dadurch zumindest teilweises Trocknen des Behälters und zumindest teilweises Anpassen der Beschichtungsblase an den Behälter, und optional zumindest teilweises Verbinden der Beschichtungsblase mit der Innenwand des Behälters.

Da die Beschichtungsblase sowohl zum Formen als auch zum Beschichten in dem Behälter verwendet wird, können der Behälter und die Beschichtungsblase gemeinsam aufgeheizt werden, wodurch der Behälter getrocknet werden kann und die Beschichtungsblase auf Verarbeitungstemperatur gebracht werden kann. So kann Energie und Zeit bei der Herstellung der beschichteten Behälter gespart werden, da etwaige Temperaturerhöhungen zum Trocknen und zum Beschichten zusammengelegt werden können.

Weiterhin kann sich die Beschichtungsblase aufgrund der hohen Temperaturen mit der Innenwand des Behälters verkleben, was die Stabilität und Widerstandsfähigkeit des Behälters erhöhen kann. Insbesondere wird die Beschichtungsblase so mit dem Behälter oder den Behälterelementen verklebt, dass sich die beiden Komponenten zum Recycling trennen lassen.

Alternativ kann die Beschichtungsblase auch gegen das Verrutschen relativ zum Behälter durch Kerben im Behälter gesichert werden. Durch das Anlegen der Beschichtungsblase an die Kerbe im Behälter entsteht so eine formschlüssige Verbindung.

In einer alternativen Ausführungsform kann die Beschichtungsblase nur an die Innenwand des Behälters angelegt werden, insbesondere wenn die Materialien der Beschichtungsblase und des Behälters nicht oder nur unter großem Aufwand zusammen recycelt werden können, sodass das Trennen der Schichten zum Recyceln des Behälters erleichtert wird.

In einer weiteren Ausführungsform kann als Material für die Beschichtungsblase ein biologisch abbaubares Material, insbesondere PLA, PBAT, PHA; PHBH, Cellulose-basierte Polymere, Stärke-Polymere, Protein-basierte Polymere, Lignin-basierte Polymere oder Naturkautschuk, oder ein Kunststoff, insbesondere PEF, PE, PET, HDPE, PVOH oder EVOH, oder eine Mischung der genannten Materialien verwendet werden. So kann die Umweltbelastung durch den Behälter, insbesondere bei einer unsachgemäßen Entsorgung, vermindert werden. Überdies kann das Recyceln des Behälters erleichtert werden. Insbesondere kann die Beschichtungsblase als Mehrschichtstruktur ausgeführt sein, um eine erhöhte Beständigkeit gegen thermische und/oder mechanische Belastung zu erzielen.

Ist zusätzlich das Material des Behälters aus ökologisch abbaubaren Fasern (wie oben genannt) hergestellt, kann ein derartiger Behälter, welcher beispielsweise aus ökologischen Fasern für die Grundstruktur und ökologisch abbaubaren Material für die Beschichtung besteht, in einem Schritt umweltschonend recycelt oder biologisch abgebaut werden.

In einem weiteren Ausführungsbeispiel kann die Beschichtungsblase so beaufschlagt werden, dass die Beschichtungsblase weniger als 25%, insbesondere weniger als 10%, des Gewichts des Behälters aufweist.

Alternativ kann die Beschichtungsblase so beaufschlagt werden, dass die Wandstärke der Beschichtungsblase nach der Expansion zumindest teilweise weniger als 20%, insbesondere weniger als 10%, der Wandstärke des Behälters aufweist.

Hier werden die Wandstärken der Beschichtungsblase und des Behälters in dem Bereich verglichen, in dem die Beschichtungsblase am Behälter anliegt.

Mit einer derartigen Wandstärke der Beschichtungsblase kann das Faser enthaltene Material des Behälters an der Innenseite wasserdicht versiegelt werden. Gleichzeitig wird die Masse des Behälters nicht übermäßig durch die Beschichtungsblase bzw. die daraus resultierende Beschichtungsschicht erhöht und es wird weniger Beschichtungsmaterial verbraucht.

In einer weiteren Ausführungsform kann die Beschichtungsblase mit einem Überdruck von mindestens 50.000Pa (0,5bar), insbesondere zwischen 1.000.000Pa (10bar) 4.000.000Pa (40bar), beaufschlagt werden, damit der Behälter mit entsprechenden Gegendruck geformt werden kann und die Beschichtungsblase so gegen die Innenwand des Behälters gedrückt wird, dass die Innenwand des Behälters glattgedrückt wird. Es ist zudem möglich, die Wandstärke des Behälters derart zu komprimieren, dass die Feuchtigkeit zumindest teilweise aus dem Behälter gepresst wird, wodurch der Restfeuchteanteil des Behälters verringert wird.

In einem weiteren Ausführungsbeispiel kann die Temperatur zumindest eines Bereiches des Behälters und zumindest eines Bereiches der Beschichtungsblase mittels heißer Luft, Dampf, Infrarotstrahlung, Mikrowellenstrahlung, Induktion, oder Wärmeübertragung durch ein Fluid oder Thermoelement erhöht werden, damit Bereiche des Behälters energieeffizient getrocknet und Bereiche der Beschichtungsblase energieeffizient auf Verarbeitungstemperatur gebracht werden können.

In einer weiteren Ausführungsform kann die Temperatur zumindest eines Bereiches des Behälters derart erhöht werden, dass der Behälter zumindest teilweise auf unter 20% Restfeuchtegehalt, insbesondere unter 10% Restfeuchtegehalt, getrocknet wird, um einen formstabilen und strapazierfähigen Behälter herzustellen. Durch den Überdruck, mit dem die Beschichtungsblase während der Trocknung des Behälters gegen die Innenwand des Behälters drückt, kann das Schrumpfen des Behälters verhindert werden.

In einem weiteren Ausführungsbeispiel kann die Temperatur zumindest eines Bereiches der Beschichtungsblase zumindest zeitweise auf zwischen 20°C und 250°C, insbesondere auf zwischen 100°C und 200°C, erhöht werden. So ist die Beschichtungsblase dehnbarer, leicht zu verarbeiten und passt sich beim Anlegen an die Innenwand des Behälters an.

In einer weiteren Ausführungsform kann als Druckmedium ein Gas, insbesondere Luft, oder eine Flüssigkeit, insbesondere Wasser oder das im Behälter zu verpackende Produkt, verwendet werden. Insbesondere bei der Verwendung des zu verpackenden Produkts als Druckmedium kann der Prozessschritt des Einfüllens mit der Beauftragung der Beschichtungsblase angelegt werden, wodurch der Herstellungsprozess effizienter wird.

In einer weiteren Ausführungsform kann das Verfahren das Formen von Fasern, insbesondere Pulpe, umfassenden Behälterelementen, die eine Öffnung umfassen, wobei die Behälterelemente in einer Form zur Verfügung gestellt werden und insbesondere um eine Beschichtungsblase herumgeformt werden, umfassen, wobei die einzelnen Behälterelemente von der Beschichtungsblase zusammengefügt werden. So kann die Flexibilität bei der Formgebung der Behälter erhöht werden.

Die Aufgabe wird ebenfalls durch eine Vorrichtung gemäß Anspruch 11 gelöst.

Die Vorrichtung ist so ausgebildet, dass die Beschichtungsblase nach dem Beaufschlagen mit Druck zum Formen des Behälters abgetrennt werden kann und als Beschichtung der Innenwand des Behälters im Behälter verbleiben kann. Somit entfällt das Ablassen des Drucks aus der Beschichtungsblase und anschließende Herausziehen der Blase nach dem Formen. Die Beschichtungsblase kann somit doppelt genutzt werden und der Form- und Beschichtungsprozess kann zeitgleich ablaufen. Damit kann mit der Vorrichtung das Herstellungsverfahren der Fasern umfassenden Behälter zeiteffizienter und energieeffizienter durchgeführt werden.

Gemäß einem weiteren Ausführungsbeispiel kann die Vorrichtung weiter umfassen: eine Trocknungseinrichtung zum Erhöhen der Temperatur zumindest eines Bereichs des Behälters und zumindest eines Bereichs der Beschichtungsblase, wobei die Trocknungseinrichtung so ausgebildet sein kann, dass der Behälter zumindest teilweise getrocknet werden kann und sich die Beschichtungsblase zumindest teilweise an die Innenwand des Behälters anpassen kann, und insbesondere die Beschichtungsblase zumindest teilweise eine Verbindung mit der Innenwand des Behälters eingehen kann.

Da die Beschichtungsblase sowohl zum Formen als auch zum Beschichten in dem Behälter verwendet werden kann, können der Behälter und die Beschichtungsblase gemeinsam mit der Trocknungseinrichtung aufgeheizt werden, wodurch der Behälter getrocknet werden kann und die Beschichtungsblase auf Verarbeitungstemperatur gebracht werden kann. So kann Energie und Zeit bei der Herstellung des beschichteten Behälters gespart werden, da etwaige Temperaturerhöhungen zum Trocknen und zum Beschichten zusammengelegt werden können.

Gemäß einer weiteren Ausführungsform kann die Beschichtungseinrichtung so ausgebildet sein, dass die Beschichtungsblase mit einem Überdruck von mindestens 50.000Pa (0,5bar), insbesondere zwischen 1.000.000Pa (10bar) und 4.000.000Pa (40bar), beaufschlagt werden kann, damit der Behälter mit entsprechenden Gegendruck geformt werden kann und die Beschichtungsblase so gegen die Innenwand des Behälters gedrückt werden kann, dass die Innenwand des Behälters plattgedrückt werden kann. Es ist zudem möglich, dass die Wandstärke des Behälters derart komprimiert wird, dass die Feuchtigkeit zumindest teilweise aus dem Behälter gepresst werden kann, wodurch der Restfeuchteanteil des Behälters verringert werden kann.

Gemäß einem weiteren Ausführungsbeispiel kann die Trocknungseinrichtung so ausgebildet sein, dass die Temperatur zumindest eines Bereiches des Behälters und zumindest eines Bereiches der Beschichtungsblase mittels heißer Luft, Dampf, Infrarotstrahlung, Mikrowellenstrahlung, Induktion, oder Wärmeübertragung durch ein Fluid oder Thermoelement erhöht werden kann, damit zumindest Bereiche des Behälters und der Beschichtungsblase energieeffizient getrocknet bzw. auf Verarbeitungstemperatur gebracht werden können.

In einer weiteren Ausführungsform kann die Beschichtungseinrichtung so ausgebildet sein, dass verschiedene Behälterelemente mithilfe der Beschichtungsblase zusammengefügt werden. So kann die Flexibilität bei der Formgebung der Behälter erhöht werden.

Die Erfindung wird nachfolgend bezugnehmend auf die Figuren anhand von Ausführungsbeispielen weiter im Detail beschrieben. Hierbei können einzelne Merkmale der jeweiligen Ausführungsbeispiele kombiniert werden, um neue Ausgestaltungen zu erzielen.
- Figur 1: zeigt eine Vorrichtung gemäß einer ersten Ausführungsform.
- Figuren 2A bis 2F: zeigen Verfahrensschritte zum Formen und Beschichten eines Behälters mit einer Vorrichtung gemäß einer ersten Ausführungsform.
- Figuren 3A bis 3C: zeigen verschiedene Ausführungsform einer Beschichtungsblase.

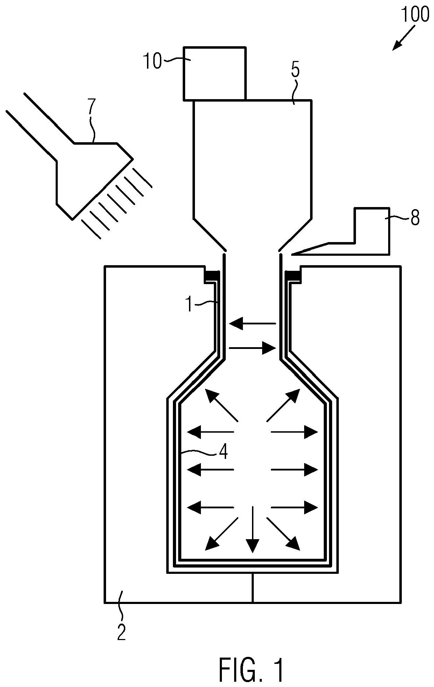

Figur 1 zeigt eine Vorrichtung 100, die eine Form 2 umfasst, in der der Behälter 1 zumindest teilweise auszubilden ist. Die Form 2 kann zwei- oder mehrteilig ausgeführt sein. Zum Beaufschlagen der Beschichtungsblase 4 umfasst die Vorrichtung 100 weiter eine Beschichtungseinrichtung 5 und eine Druckquelle 10, insbesondere eine Pumpe oder einen Kompressor und eine Trenneinrichtung 8. Die Druckquelle 10 kann dabei so ausgeführt sein, dass ein maximaler Überdruck von mindestens 50.000Pa (0,5bar), insbesondere mindestens 1.000.000Pa (10bar), erzeugt werden kann.

Zudem kann die Vorrichtung 100 eine Trocknungseinrichtung 7 umfassen, mit der die Temperatur des Behälters 1 und der Beschichtungsblase 4 zumindest teilweise erhöht werden kann.

Die Trocknungseinrichtung 7 kann die Wärme insbesondere mittels heißer Luft, Dampf, Infrarotstrahlung, Mikrowellenstrahlung, Induktion, Wärmeübertragung durch ein Fluid oder Thermoelement bereitstellen.

Die Trenneinrichtung 8 kann die Beschichtungsblase 4 von der Beschichtungseinrichtung 5, wie in Figur 1E dargestellt, mechanisch trennen. Die Trenneinrichtung 8 kann scharfkantig ausgeführt sein, und insbesondere eingeschwenkt oder eingefahren werden, um die Beschichtungsblase 4 von der Beschichtungseinrichtung 5 zu trennen bzw. abzuschneiden, nachdem die Beschichtungsblase 4 im Behälter 1 eingebracht und mit Druck beaufschlagt wurde.

Die Trenneinrichtung 8 kann zweiteilig ausgeführt sein, wobei sich zwei insbesondere scharfkantig ausgeführte mechanische Trennelemente aufeinander zubewegen können, um die Beschichtungsblase 4 von der Beschichtungseinrichtung 5 zu trennen bzw. abzuschneiden.

Die Trenneinrichtung 8 kann weiterhin als thermisches Element ausgeführt sein. So kann die Beschichtungsblase 4 lokal derart erhitzt werden, dass die Beschichtungsblase 4 an der erhitzten Stelle schmilzt und die Beschichtungsblase 4 von der Beschichtungseinheit 5 getrennt wird.

Überdies kann die Trenneinrichtung 8 die Beschichtungsblase 4 von der Beschichtungseinheit 5 auch durch Wegbewegen der Beschichtungseinrichtung 5 oder der Form 2 bzw. des Behälters 1 trennen.

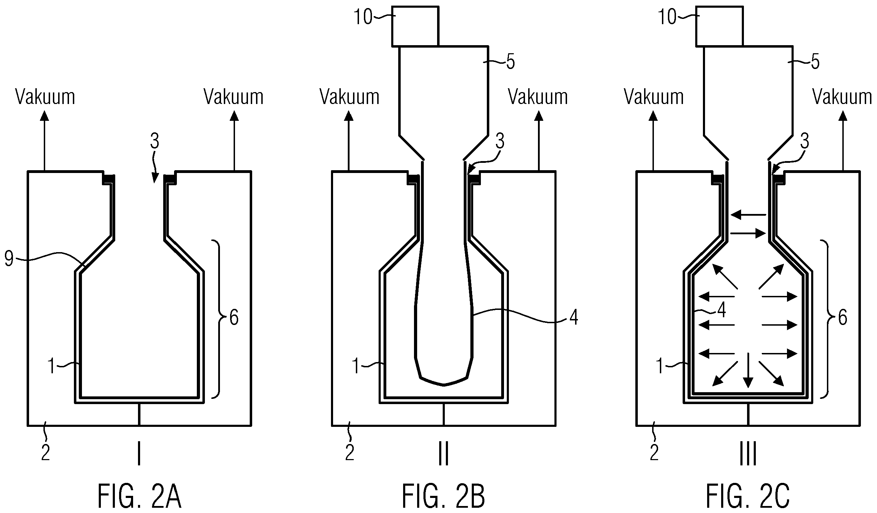

Mit Hilfe der Vorrichtung 100 kann das Verfahren wie folgt durchgeführt werden:
Im ersten Verfahrensschritt I (Figur 2A) ist der Behälter 1 zumindest teilweise innerhalb der Form 2 ausgebildet und umfasst eine Öffnung 3. Die Form 2 kann insbesondere zweiteilig oder mehrteilig ausgebildet sein, sodass auch ein Behälter 1 der eine Hinterschneidung 9, insbesondere durch einen im Vergleich zum Hauptkörper 6 des Behälters 1 verjüngten Bereich der Öffnung 3 des Behälters 1, aufweist, aus der Form 2 entnommen werden kann, ohne die Form 2 oder den Behälter 1 zu beschädigen. Weiterhin kann der Behälter 1 im ersten Verfahrensschritt I aus einem pulpehaltigen Material mit einer Restfeuchte von über 20 % bestehen.

Der Behälter 1 kann dabei mit der Öffnung 3 nach oben aber auch kopfüber oder in anderer Ausrichtung in der Form 2 ausgebildet sein.

In Verfahrensschritt II (Figur 2B) kann nun die Beschichtungsblase 4 mithilfe der Beschichtungseinrichtung 5 innerhalb des Behälters 1 gebildet oder durch die Öffnung 3 in den Behälter 1 eingebracht werden. Das Material zum Bilden der Beschichtungsblase 4 kann beispielsweise als dünner Film/Folie oder auch als Flüssigkeit vorliegen und besteht insbesondere aus einem biologisch abbaubaren Material, wie beispielsweise Ecovio, PLA, PBAT, PHA, PHBH, cellulosebasierte Polymere, stärkebasierte Polymere, proteinbasierte Polymere, ligninbasierte Polymere, Naturkautschuk oder Grundstoffmaterialien wie PEF, PE, HDPE, PVOH und EVOH.

Wird die Beschichtungsblase 4 durch die Öffnung 3 in den Behälter 1 eingebracht, ist die Beschichtungsblase insbesondere so ausgeführt, dass sie im drucklosen Zustand (kein Überdruck bzw. Überdruck größer 50.000Pa (0,5bar) im Inneren der Beschichtungsblase 4) durch die Öffnung 3 hindurch passt.

Im Verfahrensschritt III, der in Figur 2C gezeigt ist, wird nun die Beschichtungsblase 4 mithilfe einer Druckquelle 10 zu ihrer Expansion mit einem Druckmedium beaufschlagt, sodass sich die Beschichtungsblase zumindest teilweise an der Innenwand des Behälters anlegt. Der Überdruck innerhalb der Beschichtungsblase 4 ist in Figur 2C mit Pfeilen in Richtung der Innenwand des Behälters 1 dargestellt, und ist insbesondere mindestens 50.000Pa (0,5bar), insbesondere mindestens 1.000.000Pa (10bar), sodass die Beschichtungsblase 4 den Behälter 1 gegen die Form 2 drückt bzw. dessen Wandstärke komprimieren kann. So kann die innere Oberfläche des Behälters 1 geglättet werden. Die Beschichtungsblase 4 kann zudem die Wandstärke des Behälters 1 derart komprimieren, dass die Flüssigkeit aus dem Material des Behälters 1, insbesondere pulpehaltiges Material, gepresst wird. So kann der Restfeuchteanteil des Behälters 1 auf unter 20%, insbesondere unter 10%, verringert werden, sodass eine weitere Trocknung des Behälters 1 nicht notwendig ist.

Als Druckmedium kann insbesondere ein Gas wie beispielsweise Luft oder eine Flüssigkeit, wie beispielsweise Wasser oder das Produkt, das in den Behälter 1 abgefüllt werden soll, verwendet werden. Wird als Druckmedium bereits das Produkt, das im Behälter 1 abgefüllt werden soll, verwendet, entfällt der zusätzliche Abfüllprozess und die Herstellung der Behälter und anschließende Verpackung des Produkts kann effizienter durchgeführt werden.

Zudem kann die Beschichtungsblase 4 so ausgeführt sein, dass sie bei einem Überdruck, welcher durch das Druckmedium von der Druckquelle 10 an die Beschichtungsblase 4 übertragen wird, zunächst in einem unterem Bereich 6 des Behälters 1 an dessen Innenwand anliegt, bevor sich die Beschichtungsblase 4 auch im Bereich der Öffnung 3 an die Innenwand des Behälters 1 anliegt. So kann vermieden werden, dass Einschlüsse, insbesondere der zuvor im Behälter 1 vorhandenen Luft, innerhalb der Wandstärke des Behälters 1 entstehen.

Insbesondere kann die Beschichtungsblase 4 derart mit Druck beaufschlagt werden, dass die Wandstärke der Beschichtungsblase weniger als 20% der Wandstärke des entsprechenden Abschnitts des Behälters 1 an dem die Beschichtungsblase 4 anliegt, beträgt.

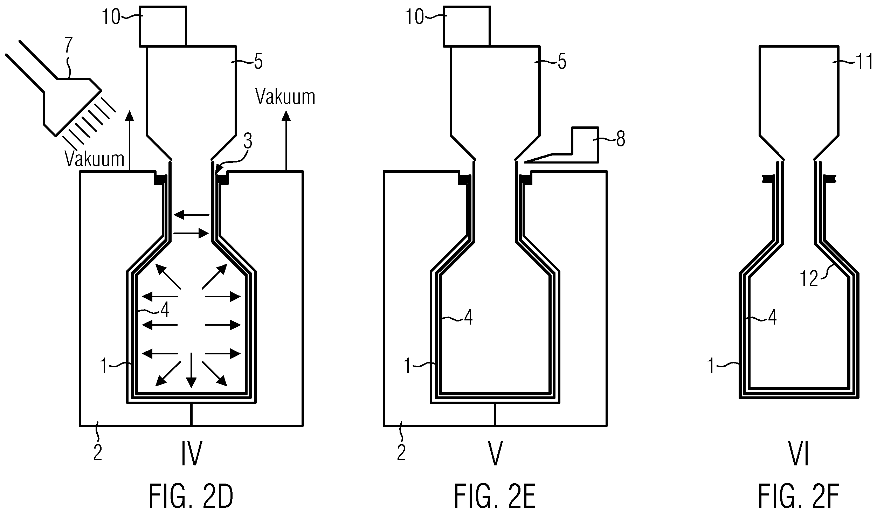

In einem optionalen Verfahrensschritt IV, der in Figur 2D gezeigt ist, kann die Temperatur des Behälters 1 und der Beschichtungsblase 4 erhöht werden. Wie mit den Pfeilen in Figur 2D in Richtung der Innenseite des Behälters 1 angedeutet, wird die Beschichtungsblase 4 während des Heizens bzw. des Erhöhens der Temperatur mit Druck über die Druckquelle 10 beaufschlagt.

Mit der erhöhten Temperatur kann der Behälter 1 getrocknet werden, insbesondere auf einen Restfeuchtegehalt von weniger als 20%, insbesondere 1-10 %. Durch den Trockenvorgang kann die Stabilität und Formgenauigkeit des Behälters 1 erhöht werden. Da während des optionalen Trockenvorgangs die Beschichtungsblase 4 mit Druck beaufschlagt ist, wird einem Schrumpfen des Behälters 1 während des Trockenvorgangs entgegengewirkt. So kann eine formgenaue Herstellung des Behälters sichergestellt werden.

Zudem kann sich durch die zumindest teilweise erhöhte Temperatur, insbesondere auf zwischen 100°C und 200°C, die Beschichtungsblase 4 mit der Innenwand des Behälters 1 verkleben, sodass der beschichtete Behälter 4 stabiler und widerstandsfähiger ist.

Alternativ ist es auch möglich, die Temperaturen geringer zu halten. So legt sich die Beschichtungsblase 4 lediglich an die Innenwand des Behälters 1 an und ein Verkleben der Beschichtungsblase 4 mit dem Behälter 1 wird verhindert. Dieses Verfahren ist insbesondere anzuwenden, wenn eines der Materialien der Beschichtungsblase 4 oder des Behälters 1 nicht biologisch abbaubar ist, und die beiden Schichten beim Recyceln getrennt werden können.

Zum Erhöhen der Temperatur können verschiedene Wärmequellen wie beispielsweise heiße Luft oder Dampf, Infrarot, Mikrowellenstrahlung, Induktion, ein wärmeübertragendes Fluid oder Thermoelement verwendet werden. Schematisch ist in Figur 2D eine Infrarotlampe zum Erhöhen der Temperatur zumindest eines Bereichs des Behälters bzw. der Beschichtungsblase dargestellt. In Verfahrensschritt V (Figur 2E) wird nun die Beschichtungsblase 4, die sich zumindest teilweise an die Innenwand des Behälters 1 angelegt hat, mit der Trenneinrichtung 8 von der Beschichtungseinrichtung 5, bzw. der Druckquelle 10 getrennt, sodass die Beschichtungsblase 4 als Beschichtung im Behälter 1 verbleibt.

Überdies kann, wie im optionalen Verfahrensschritt VI der Figur 2F gezeigt, zusätzlich zu der bereits in den Behälter 1 eingebrachten Beschichtungsblase 4 mindestens ein zusätzlicher Beschichtungsschritt zum Aufbringen mindestens einer zusätzlichen Beschichtung stattfinden. Die zusätzliche Beschichtung kann hierbei eine Dicke von maximal 1,0mm, insbesondere maximal 0,000001 mm, aufweisen. Die zusätzliche Beschichtung kann als zusätzliche Beschichtungsblase 12 beispielweise mit einer zusätzlichen Beschichtungseinrichtung 11 auf die Beschichtungsblase 4 aufgetragen werden, sodass die zusätzliche Beschichtung zur Innenseite des Behälters zeigt. Die zusätzliche Beschichtungsblase 12 kann alternativ auch von der Beschichtungseinrichtung 5, mit der insbesondere auch die Beschichtungsblase 4 in den Behälter 1 eingebracht und mit Druck beaufschlagt werden kann, aufgetragen werden.

Die zusätzliche Beschichtungsblase 12, kann von der zusätzlichen Beschichtungseinrichtung 5 oder alternativ der Beschichtungseinrichtung 5 durch die Trennvorrichtung 8 oder eine zusätzliche Trennvorrichtung (nicht dargestellt) mechanisch, thermisch oder durch Wegbewegen der zusätzlichen Beschichtungseinrichtung 5 oder alternativ der Beschichtungseinrichtung 5 getrennt werden.

Es ist ebenfalls denkbar, dass die Temperatur des Behälters 1 und der zusätzlichen Beschichtung, die beispielsweise in Form einer zusätzlichen Beschichtungsblase 12 in den Behälter 1 eingebracht wird, durch die Trocknungseinrichtung 7 erhöht wird. So kann eine die Verarbeitung der zusätzlichen Beschichtung erleichtert werden.

Es sind Ausführungsformen denkbar, in denen die zusätzliche Beschichtung beispielsweise aufgesprüht oder anderweitig aufgetragen wird, sodass die zusätzliche Beschichtung zur Innenseite des Behälters 1 zeigt. Die zusätzliche Beschichtung kann insbesondere aus einem Material bestehen, das die Gasdurchlässigkeit des beschichteten Behälters 1 minimiert, insbesondere SiOx, und insbesondere in einer Dicke zwischen 0,000015 mm und 0,00002 mm ausgebildet sein.

Alternativ kann die zusätzliche Beschichtung auch mithilfe von Plasmabeschichtung aufgebracht werden. Hierfür kann eine Behandlungseinrichtung (nicht dargestellt) in das Innere des Behälters 1 ein Gas einbringen. Es kann ein für den Plasmaprozess geeignetes Gas in den Behälter 1 eingeleitet und möglichst homogen im Inneren des Behälters verteilt werden. Insbesondere kann das in das Innere des Behälters 1 eingebrachte Gas entzündet werden, so dass ein Plasma entsteht. Hierzu kann beispielsweise eine Elektrode in den Behälter 1 eingebracht werden. Die Energie, die das Plasma zünden soll, kann dann in Form von Hochfrequenz über diese Elektrode eingeleitet werden. insbesondere kann es sich bei diesem Gas um ein Gemisch aus einem siliziumhaltigen Präkursor und Sauerstoff handeln, insbesondere für eine PECVD (=plasma enhanced chemical vapor deposition) mit Siliziumoxid. Es sind jedoch auch andere Gase denkbar, zum Beispiel Acetylen für die Abscheidung von sog. DLC-Schichten.

Mit der zusätzlichen Beschichtung kann die Gaspermeation des Behälters 1 verringert werden, wodurch eine längere Haltbarkeit der in dem Behälter gelagerten Flüssigkeiten/Lebensmittel erreicht werden kann. Gleichzeitig kann durch eine derartige zusätzliche Beschichtung der Gewichtsanteil der Beschichtungen insgesamt unter 10%, insbesondere unter 5%, gehalten werden, wodurch das Recycling erleichtert wird.

Figur 2F zeigt eine Durchführung des Verfahrensschritts VI bei der der Behälter 1 bereits zuvor aus der Form 2 entnommen wurde. Verfahrensschritt VI kann aber auch durchgeführt werden, während sich der Behälter 1 noch in der Form 2 befindet.

Als alternative Ausführungsform ist es ebenfalls möglich, dass der Behälter 1 mithilfe der Beschichtungsblase 4 mit nur leichtem Innendruck unter 10.000Pa (10bar) oder mithilfe einer anderen Vorrichtung (nicht dargestellt) an eine zweite Form (nicht dargestellt), insbesondere mit glatterer Oberfläche als die erste Form 2, überführt wird, in welcher der Behälter 1 geformt und oder getrocknet werden kann.

Die zweite Form kann insbesondere vorgeheizt sein, beziehungsweise durchgehend beheizt sein, wodurch auf das energieaufwendige Aufheizen der Form 2 für die Trocknung des Behälter 1 und die Verarbeitung der Beschichtungsblase 4 verzichtet werden kann.

Überdies kann die Form 2 während des Formens des Behälters 1 beheizbar sein, sodass die Form 2 eine gegenüber dem Behälter 1 erhöhte Temperatur haben kann, um den Behälter 1 zu trocknen. Dabei kann die Form 2 auf bis zu 500°C, insbesondere bis zu 250°C, beheizt werden. Durch eine derart beheizte Form 2 können die Behälter 1 vorgetrocknet oder auch vollständig getrocknet werden. Hierbei kann der Restfeuchtegehalt des Behälters von bis zu 90% auf eine Restfeuchte zwischen 10% und 30% bei einer Vortrocknung und auf einen Restfeuchtegehalt zwischen 5% und 10% für die vollständige Trocknung reduziert werden. Während des Trockenvorgangs kann durch das Komprimieren einerseits freies Wasser und durch die erhöhte Temperatur der Form 2 auch in den Fasern des Behälters 1 gebundenes Wasser entfernt werden.

Zudem kann die Form 2 porös sein und Vakuumkanäle aufweisen. So kann die Form 2 mit Vakuum beaufschlagt werden (wie in Figuren 2A bis 2D gezeigt), wodurch das freie Wasser/der Wasserdampf, das/der während des Form- und/oder Trockenprozesses frei wird, abgesaugt werden kann.

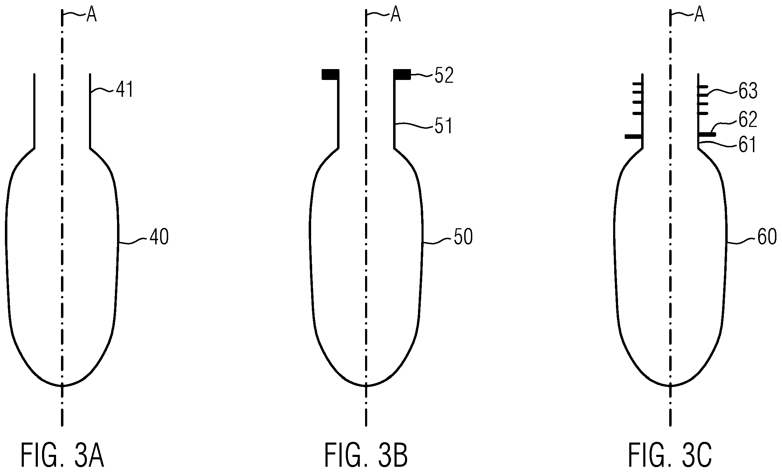

Die Beschichtungsblase 40 kann gemäß einer Ausführungsform wie in Figur 3A gezeigt im Mündungsbereich 41 zur Mündung des Behälters (nicht dargestellt) ohne weitere Befestigungsmittel (nicht dargestellt) ausgeführt sein. In einem weiteren Schritt kann ein Befestigungsmittel für einen Verschluss (nicht dargestellt) zusätzlich an den Mündungsbereich der Blase 41 angeklebt werden, oder der Verschluss, beispielsweise eine Kappe (mit oder ohne Gewinde) und/oder ein Siegel wird direkt am Behälter befestigt.

Die Beschichtungsblase 50 kann wie in Figur 3B gezeigt gemäß einer Ausführungsform im Mündungsbereich 51 eine Lippe 52 aufweisen. Mithilfe der Lippe 52 kann die Beschichtungsblase 50 mit dem Mündungsstück eines Behälters (nicht dargestellt) in axialer Richtung der Längsachse A wasserdicht verbunden werden. Weiterhin ist es möglich, dass ein Verschluss direkt an die Lippe 52 der Beschichtungsblase 50 anschließt, und so eine wasserdichte Hülle erzeugt wird, sodass der Behälter, insbesondere aus pulpehaltigem Material, nicht in Kontakt mit der Flüssigkeit in der Beschichtungsblase 50 kommt.

Die Beschichtungsblase 60 kann wie in Figur 3C gezeigt im Mündungsbereich 61 insbesondere ein Gewinde 63 sowie einen Abschlussring/Tragring 62 aufweisen. Mithilfe des Gewindes 63 kann die Beschichtungsblase 60 mit einem Verschluss wasserdicht verbunden werden. Der Abschlussring/Tragring 62 kann als Anschlag für den auf das Gewinde schraubbaren Verschluss dienen. Überdies kann die Beschichtungsblase 60 mit einem oder ohne einen die Beschichtungsblase 60 umgebenen Behälter (nicht dargestellt) transportiert werden.

Als alternative Ausführungsform können auch zunächst mehrere Behälterelemente geformt werden, die dann mithilfe der Beschichtungsblase zusammengefügt werden. Durch eine mehrteilige Ausführung des Behälters sind auch aufwändigere Geometrien mit vergleichsweise einfachen Formen fertigbar. Gleichzeitig dichtet die Beschichtungsblase die einzelnen Behälterelemente luft- und/oder wasserdicht zueinander ab.

In einer weiteren alternativen Ausführungsform kann die Beschichtungsblase in die Form eingebracht werden, bevor der Behälter geformt wird. In diesem Fall werden die Fasern, insbesondere Pulpe, um die Beschichtungsblase herum angeströmt und anschließend wird der Behälter geformt und beschichtet. So kann der Fertigungsprozess flexibler gestaltet werden.

## Patentansprüche

1. Verfahren zum Formen und Beschichten eines Fasern, insbesondere Pulpe, umfassenden Behälters (1), wobei das Verfahren umfasst:
- Formen eines Fasern, insbesondere Pulpe, umfassenden Behälters (1), der eine Öffnung (3) umfasst, wobei der Behälter (1) in einer Form (2) zur Verfügung gestellt wird, oder
- Formen von Fasern, insbesondere Pulpe, umfassenden Behälterelementen, die eine Öffnung umfassen, wobei die Behälterelemente in einer Form (2) zur Verfügung gestellt werden,
- Formen einer Beschichtungsblase (4, 40, 50, 60), welche zumindest zeitweise und/oder teilweise von dem Behälter (1) oder den Behälterelementen umgeben ist,
- Beaufschlagen der Beschichtungsblase (4, 40, 50, 60) zu deren Expansion mit einem Druckmedium einer Druckquelle (10), so dass zumindest teilweise die Beschichtungsblase (4, 40, 50, 60) an einer Innenwand des Behälters (1) oder der Behälterelemente angelegt wird und optionales zumindest teilweises Komprimieren der Wandstärke des Behälters (1), und
- Trennen der Beschichtungsblase (4, 40, 50, 60) von der Druckquelle (10), während die Beschichtungsblase (4, 40, 50, 60) zumindest teilweise als Behälterbeschichtung in dem Behälter (1) oder den Behälterelementen verbleibt.

2. Verfahren nach Anspruch 1, wobei als Material für die Beschichtungsblase (4, 40, 50, 60) ein biologisch abbaubares Material, insbesondere PLA, PBAT, PHA; PHBH, Cellulose-basierte Polymere, Stärke-Polymere, Protein-basierte Polymere, Lignin-basierte Polymere oder Naturkautschuk, oder ein Kunststoff, insbesondere PEF, PE, PET, HDPE, PVOH oder EVOH, oder eine Mischung der genannten Materialien, verwendet wird.

3. Verfahren nach Anspruch 1 oder 2, wobei die Beschichtungsblase (4, 40, 50, 60) so beaufschlagt wird, dass die Beschichtungsblase (4, 40, 50, 60) weniger als 25%, insbesondere weniger als 10%, des Gewichts des Behälters (1) oder der Behälterteile aufweist.

4. Verfahren nach einem der vorigen Ansprüche, wobei die Beschichtungsblase (4, 40, 50, 60) mit einem Überdruck von mindestens 50.000Pa, insbesondere zwischen 1.000.000Pa und 40.000.000Pa, beaufschlagt wird.

5. Verfahren nach einem der vorigen Ansprüche, wobei das Verfahren weiter umfasst:
Erhöhen der Temperatur zumindest eines Bereiches des Behälters (1) oder der Behälterelemente und zumindest eines Bereiches der Beschichtungsblase (4, 40, 50, 60),
dadurch zumindest teilweises Trocknen des Behälters (1) oder der Behälterelemente und zumindest teilweises Anpassen der Beschichtungsblase (4, 40, 50, 60) an den Behälter (1) oder die Behälterelemente, und optional zumindest teilweises Verbinden der Beschichtungsblase (4, 40, 50, 60) mit der Innenwand des Behälters (1) oder der Behälterelemente.

6. Verfahren nach Anspruch 5, wobei die Temperatur zumindest eines Bereiches des Behälters (1) oder der Behälterelemente und zumindest eines Bereiches der Beschichtungsblase (4, 40, 50, 60) mittels heißer Luft, Dampf, Infrarotstrahlung, Mikrowellenstrahlung, Induktion, oder Wärmeübertragung durch ein Fluid oder ein Thermoelement erhöht wird.

7. Verfahren nach Anspruch 5 oder 6, wobei die Temperatur zumindest eines Bereiches des Behälters (1) oder der Behälterelemente derart erhöht wird, dass der Behälter (1) zumindest teilweise auf unter 20% Restfeuchtegehalt, insbesondere unter 10% Restfeuchtegehalt, getrocknet wird.

8. Verfahren nach einem der Ansprüche 2 bis 7, wobei die Temperatur zumindest eines Bereiches der Beschichtungsblase (4, 40, 50, 60) zumindest zeitweise auf zwischen 20°C und 250°C, insbesondere auf zwischen 100°C und 200°C, erhöht wird.

9. Verfahren nach einem der vorigen Ansprüche, wobei als Druckmedium ein Gas, insbesondere Luft, oder eine Flüssigkeit, insbesondere Wasser oder das im Behälter zu verpackende Produkt, verwendet wird.

10. Verfahren nach einem der vorigen Ansprüche, wobei das Verfahren das Formen von Fasern, insbesondere Pulpe, umfassenden Behälterelementen, die eine Öffnung umfassen, wobei die Behälterelemente in einer Form (2) zur Verfügung gestellt werden und insbesondere um eine Beschichtungsblase (4, 40, 50, 60) herumgeformt werden, umfasst und die einzelnen Behälterelemente von der Beschichtungsblase (4, 40, 50, 60) zusammengefügt werden.

11. Vorrichtung zum Formen und Beschichten eines Fasern, insbesondere Pulpe, enthaltenden Behälters (1) oder Behälterelementen, die eine Öffnung (3) aufweisen, insbesondere gemäß einem Verfahren der Ansprüche 1 bis 10, wobei die Vorrichtung (100) umfasst:
- eine Form (1), in der der Behälter (1) oder Behälterelemente zumindest teilweise auszubilden sind,
- eine Beschichtungseinrichtung (5) zum Formen einer Beschichtungsblase (4, 40, 50, 60) sowie eine Druckquelle (10) und zum Beaufschlagen der Beschichtungsblase (4, 40, 50, 60) zu deren Expansion mit einem Druckmedium, sodass die Beschichtungsblase (4, 40, 50, 60) zumindest teilweise an einer Innenwand des Behälters (1) oder der Behälterelemente anliegt und insbesondere die Beschichtungsblase (4, 40, 50, 60) zumindest teilweise eine Wandstärke des Behälters (1) oder der Behälterelemente komprimiert, und
- eine Trenneinrichtung (8) zum Trennen der Beschichtungsblase (4, 40, 50, 60) von der Druckquelle (10) während die Beschichtungsblase (4, 40, 50, 60) als Beschichtung in dem Behälter (1) oder den Behälterelementen verbleibt.

12. Vorrichtung nach Anspruch 11, wobei die Beschichtungseinrichtung (5) so ausgebildet ist, dass die Beschichtungsblase (4, 40, 50, 60) mit einem Überdruck von mindestens 50.000Pa, insbesondere zwischen 1.000.000Pa und 40.000.000Pa, beaufschlagt wird.

13. Vorrichtung nach Anspruch 11 oder 12, wobei die Vorrichtung (100) weiter umfasst:
eine Trocknungseinrichtung (7) zum Erhöhen der Temperatur zumindest eines Bereichs des Behälters (1) oder der Behälterelemente und zumindest eines Bereichs der Beschichtungsblase (4, 40, 50, 60), wobei die Trocknungseinrichtung so ausgebildet ist,
dass der Behälter (1) oder die Behälterelemente zumindest teilweise getrocknet werden und sich die Beschichtungsblase (4, 40, 50, 60) zumindest teilweise an die Innenwand des Behälters (1) oder der Behälterelemente anpasst, und insbesondere die Beschichtungsblase (4, 40, 50, 60) zumindest teilweise eine Verbindung mit der Innenwand des Behälters (1) oder der Behälterelemente eingeht.

14. Vorrichtung nach Anspruch 13, wobei die Trocknungseinrichtung (7) so ausgebildet ist, dass die Temperatur zumindest eines Bereiches des Behälters (1) oder der Behälterelemente und zumindest eines Bereiches der Beschichtungsblase (4, 40, 50, 60) mittels heißer Luft, Dampf, Infrarotstrahlung, Mikrowellenstrahlung, Induktion, oder Wärmeübertragung durch ein Fluid oder Thermoelement erhöht wird.

15. Vorrichtung nach einem der Ansprüche 11 bis 14, wobei die die Beschichtungseinrichtung (5) so ausgebildet ist, dass verschiedene Behälterelemente mithilfe der Beschichtungsblase (4, 40, 50, 60) zusammengefügt werden.
